# EUROPEAN PATENT SPECIFICATION

(11) **EP 1 247 839 B1**
(45) Date of publication and mention of the grant of the patent: **18.01.2006**
(21) Application number: 02076210.0
(22) Date of filing: 28.03.2002
(51) Int. Cl.: C08L 95/00, C08J 3/00, E01C 7/26

(54) **Method for the preparation of overlays**
Verfahren zur Herstellung von Asphaltschichten
Procédé pour la préparation de couches de recouvrement

(30) Priority: 05.04.2001 IT MI010729
(43) Date of publication of application: 09.10.2002
(73) Proprietor: ENI S.p.A., 00144 Roma (IT)
(72) Inventor: Canavesi, Elisabetta, 20124 Milan (IT); D'Elia, Luigi, 26025 Pandino (IT)
(74) Representative: De Gregori, Antonella

(56) References cited:
- EP-A- 0 655 484
- EP-A- 0 718 372
- EP-B- 0 545 740
- BE-A- 903 034
- FR-A- 2 352 763
- FR-A- 2 723 101
- FR-A- 2 745 018
- US-A- 3 565 842

## Description

The present invention relates to a method for the preparation of conglomerates for road use, especially for overlays, which utilizes emulsions of bitumen modified with high percentages of polymer.

It is known that coatings for road coverage are mainly prepared with bitumen mixed at a high temperature with inert products in plants for the production of conglomerates. Bitumen is a relatively small fraction of the mixture forming the conglomerate and acts as a visco-elastic ligand for particles of mineral aggregates (stones, sand, additives). The production of hot mixtures usually takes place at a temperature ranging from 150 to 190°C, whereas the subsequent laying onto the surface of the road is carried out at a temperature ranging from 140 to 170°C.

The aggregates, sand and bitumen are heated to a high temperature as the bitumen coats the particles of mineral aggregates making the mixture fluid, to ensure good processability, during the mixing, laying and compacting. Operating at lower temperatures often causes a deterioration in the quality of the asphalt, creating limits in the applicability of the end-mixture; it is also known however that high temperature operations have various disadvantages such as high energy consumption and the harmful emission of vapours with a consequent serious environmental impact.

For the preparation of pavements, it is particularly known that the materials are conglomerates, i.e, mixtures prepared at a high temperature (150-180°C) of inert products, according to an exact granulometric curve, and bitumen, fluidified bitumen or modified bitumen containing varying percentages of different kinds of polymers, among which the most well-known is Styrene-Butadiene-Styrene (SBS).

Parallelly, in this field particular uses of emulsions or dispersions of bitumen in water, have also been developed, stabilized due to the addition of small quantities of substances, called emulsifiers.

These emulsions are prepared by the mixing in a colloidal mill of hot bitumen with a dispersing phase (water containing the emulsifier(s) and possible acid).

In the case of the emulsification of modified bitumens, the operating temperatures are rather high and, in order to prevent the water from boiling, the mill operates under pressure; furthermore the emulsion produced is immediately cooled with a heat exchanger positioned at the outlet of the mill.

Depending on the nature of the emulsifier used, the emulsions can be of the basic type (anionic) or of the acid type (cationic).

Those of interest are of the cationic type and are produced with salts of aliphatic amines, polyamineamides or salts of quaternary ammonium.

The formulation (emulsifier and its quantity) mainly influences the "breaking velocity", an extremely important characteristic relating to the typologies of use. This is measured in terms of quantity of filler necessary to break 100 g of emulsion and can be determined by various methods among which the NF T 66-017 and prEN 13075-1 methods (Draft).

Emulsions with a rapid breaking velocity are almost exclusively suitable for spraying operations between one layer of conglomerate and another (attaching or anchoring coat); as a result of their breaking rapidity and consequent incapacity to effectively coat inert products, they are not in fact suitable for mixtures with crushed stones.

Emulsions with a medium breaking velocity, on the other hand, are used for surface treatment (such as micro-mats) for repairing cracked areas or for re-establishing the initial roughness of coatings which have become too smooth to guarantee sufficient adherence of car tyres.

In this case the layers of conglomerate are in the order of 1-1.5 cm.

Finally, emulsions with a slow breaking velocity serve for so-called cold conglomerates, mixtures with inert products quite poor in fine parts and generally used for small maintenance operations. Grave-emulsion (a conglomerate for the base layer, underneath the overlay) also belongs to this category.

In spite of all these uses of emulsions, wear layers are still currently produced in the classical way, by paste-mixing the aggregates with bitumen at high temperatures (1.50°-190°C) and applying the end-product to the road at temperatures of 140°-170°C.

This technique, as already mentioned, has considerable disadvantages, not only from the point of view of energy (the inert products and bitumen must first be heated and their mixture must then be cooled), but also with respect to the environment. The temperatures used, in fact, cause the inevitable emission of fumes containing various types of powders and organic substances, with the consequent exposure of the operators thereto.

In order to minimize these effects, alternative products and technologies are being studied which enable the temperature to be lowered during both the preparation phase of the conglomerate and during its use.

An example is described in a report presented at the 2^{nd} Eurasphalt & Eurobitume Congress (Barcellona, 20-22/09/00), Book II, pages 830-840.

In this report, a first mixing of the aggregates is proposed, with a high penetration bitumen, followed by the addition of a harder bitumen in the form of foam or emulsion. In this way, the mixing temperatures are lowered to 100-120°C and the compacting temperatures to 80-90°C.

The Applicant has, in turn, found a method for the preparation of overlays which comprises the use of emulsions based on bitumen modified with high percentages of polymer and which, in all the processing phases, is effected at much lower temperatures than those of the known art, without causing any of the above disadvantages linked to resorting to low temperatures, allowing, on the contrary, definite advantages to be obtained, especially from an ecological and toxicological point of view: with the use of the bituminous emulsions according to the present invention, in fact, it is possible to produce and set up overlays, limiting vapour emissions to the maximum.

A method for the preparation, without the emission of bituminous fumes, of overlays consisting in mixing the ingredients necessary for the formation of the overlay itself with an emulsion of bitumen modified with a percentage of polymer ranging from 1 to 20% by weight, at temperatures lower than 100°C and for times of less than 3 hours, wherein the sizes coherent with the overlay melt are mixed with the emulsion of modified bitumen necessary for having a final content of modified bitumen with respect to the total aggregates equal to 3-8% by weight, and wherein part of the filler in the sizes is substituted with a quantity of cement ranging from 1 to 10% by weight with respect to the aggregates.

The method according to the invention comprises, in reality, three operating phases, i.e. the preparation of the raw materials, the formation of the emulsion and the mixing of the emulsion with the aggregates, but the characterizing valence is the use of an emulsion of modified bitumen with a high polymer content which, for the first time, allows the preparation and laying of a road overlay at reasonable temperatures.

In specific detail, the preparation method of the overlay according to the invention can be effected by means of two alternative procedures, with the same results.
The first comprises:
- Mixing of all sizes of the inert products, excluding cement, with water;
- Addition to the mixture thus obtained of the emulsion of modified bitumen and mixing;
- Addition of the cement;
- Mixing

The second method comprises:
- Mixing of all the large sizes of inert products with a part of the emulsion of modified bitumen;
- Addition of the intermediate sizes and remaining quantity of emulsion and mixing;
- Addition of the filler and/or cement;
- Mixing.

To return, for illustrative purposes of the method according to the present invention, to the three phases necessary for the embodiment of the method, the following operating passages are particularly important:

In the first part, the raw materials are produced.

The modified bitumen used is a bitumen produced according to Italian patent 1276891 with a percentage of a styrene and butadiene block elastomeric copolymer (conventionally called SBS) ranging from 1 to 20%, preferably from 4 to 15% by weight.

The "dispersing" phase is prepared with water and small percentages of additives, called "emulsifiers" and hydrochloric acid.

The "emulsifiers" are substances belonging to the group of fatty amines, N-alkyl-amines, N-alkyl-propane diamines, N-alkyl-propylene-diamines, N-alkyl-propylenepolyamines, alkyl-amido-polyamines, alkyl-amido-imidazo-polyamines, and combinations thereof; they are to be used in a quantity of 0.1-3% of the total weight of the bituminous emulsion, typically from 0.1 to 2%.

The dosage of hydrochloric acid depends on the emulsifier used and is such as to give the final emulsion a pH ranging from 1 to 7, typically from 1 to 5.

The "dispersing" phase is prepared by mixing the acid and emulsifier with water at a temperature ranging from 20° to 80°C, preferably from 40° to 80°C.

In the second part, the emulsion is produced with the following process: the stream of modified bitumen, at a suitable temperature, and the stream of the "dispersing" phase, at a suitable temperature, are sent, under certain conditions, to the colloidal mill where they are mixed to produce the emulsion which, before being discharged, is cooled in a heat exchanger.
The production can be effected in two different ways:

### 1^{st} method

The "dispersing" phase is put in an autoclave brought to a pressure ranging from 1 to 6 bars, at a temperature ranging from 100°C to 160°C, typically from 1.5 to 5 bars. Under these conditions, it is sent to the mill contemporaneously with the modified bitumen previously brought to a temperature ranging from 140° to 210°C, preferably from 160° to 200°C.

The mill, consisting of a stator and a rotor which rotates at a velocity of up to 14,000 revs/min., remains under pressure and disperses the bitumen transforming it into an emulsion.

### 2^{nd} method

In this case, the "dispersing" phase is simply heated to a maximum temperature of 100°C, preferably lower than 95°C; whereas the modified bitumen is sent to the mill at a temperature ranging from 120°C to 200°C, preferably from 140°C to 200°C. The mill is under pressure, typically from 1 to 6 bars.

In both cases, the outgoing emulsion is cooled with an exchanger and the content of modified bitumen in the end-product can range from 30% to 80% by weight, preferably from 50% to 70%. This product consists of a continuous phase consisting of the aqueous phase and a dispersed phase consisting of drops of modified bitumen.

The emulsions obtained with the processes described above are, in particular, stable under storage conditions at room temperature. Under these conditions, no stratifications or separations of bitumen are observed, even less so separations between bitumen and polymer.

Furthermore, they are characterized by average particle diameters in the order of 0.5-5 microns, typically 0.5-3 microns and a diameter relating to 90% of the population of less than 20 microns, typically less than 10 microns.

As far as the breaking velocity is concerned (measured with the prEN 13075-1-Draft method, but with pure silica having a specific area of 430-530 m²/g), the emulsions indicate, depending on the emulsifier used, its quantity and percentage of modified bitumen content, values lower than 140 g of filler/100 g of emulsion, typically lower than 120 g/100 g of emulsion (average breaking).

### Third part: production of the paste

The quantity of emulsion used depends on its content of modified bitumen, but is such as to ensure a quantity of bitumen in the conglomerate ranging from 4% to 6% by weight.

The pieces of inert products used for producing conglomerates are in such proportions as to respect the typical granulometric melts for the overlay, such as that of the ANAS specifications:

| ASTM Sieves | Progressive undersize | |
|---|---|---|
| Nr. | Sieve Mesh (mm) | weight % |
| 1/2" | 12.7 | 100 |
| 3/8" | 9.5 | 80-100 |
| 1/4" | 6.35 | 60-88 |
| 5 mesh | 4.0 | 43-67 |
| 10 mesh | 2.0 | 25-45 |
| 20 mesh | 0.84 | 18-34 |
| 40 mesh | 0.42 | 13-25 |
| 80 mesh | 0.177 | 7-15 |
| P 200 mesh | 0.074 | 6-11 |

They are paste-mixed with the emulsion, according to the pasting techniques described below, at a temperature ranging from 0° to 120°C, for times of up to 3 hours.

Test samples are prepared with the end-product, the conglomerate, which are tested according to the CNR B.U. 40 method. The constipation is effected starting from the conglomerate at the mixing temperature and without further heating.

### Direct mixture at room temperature.

The mixtures of aggregates with the emulsion, if carried out at room temperature without expedients, produce conglomerates with such poor characteristics that they cannot even be used for preparing test samples.

By introducing modifications to the pasting techniques, object of the present invention, it is possible, on the contrary, to obtain conglomerates with a Marshall stability equal to 30-70% with respect to that of conglomerates prepared with the same melt and the same quantity of bitumen modified according to the classical hot paste-mixing technology.

### Technology 1

A first improvement in the characteristics of the conglomerate is obtained with the introduction of water, the substitution of part of the filler with cement and with a stepped mixing.

The preparation begins with the mixing of water with all the sizes, except for cement; it continues with the subsequent addition of the emulsion and ends with the final addition of cement. During each step, the mixture is mixed for 1-10 minutes, for a total typical duration of 3-15 minutes (see Example 1).

The quantity of water varies from 0 to 10% by weight with respect to the inert products, preferably from 1 to 8%, whereas the amount of cement ranges from 0 to 10%, typically from 1 to 7% by weight with respect to the aggregates.

### Technology 2

A further improvement in the characteristics is obtained by mixing all the sizes, comprising cement, with water and, finally, adding the emulsion. The typical times range form 2-10 minutes (see example 2).

### EXAMPLE 1

In order to produce the emulsion, a bitumen modified with SBS (5.5% by weight) is used, having a ring-and-ball of 95°C, a penetration of 71 dmm and a "dispersing" phase containing 0.8% of emulsifier based on fatty amines and N-alkyl-propane-diamine.

On bringing the bitumen to 190°C and the "dispersing" phase to 120°C and 3.5 bars, an emulsion is produced with the colloidal mill, containing 65% by weight of modified bitumen.

The aggregates used relate to a standard closed granulometric melt for overlays (ANAS specifications).

| ASTM Sieves | Progressive undersize | |
|---|---|---|
| Nr. | Sieve Mesh (mm) | weight % |
| 1/2" | 12.7 | 100 |
| 3/8" | 9.5 | 94 |
| 1/4" | 6.35 | 62.2 |
| 5 mesh | 4.0 | 48.4 |
| 10 mesh | 2.0 | 32.7 |
| 20 mesh | 0.84 | 22.2 |
| 40 mesh | 0.42 | 17.4 |
| 80 mesh | 0.177 | 12 |
| P 200 mesh | 0.074 | 7.8 |

The emulsion was added so as to have a final content in the conglomerate of 5.9% of modified bitumen.

All the inert products, excluding the quantity of Portland cement (5% by weight with respect to the aggregates) are mixed, at room temperature, with 5% by weight with respect to the inert products, of water. After 2 minutes of mixing, the emulsion is added and the mixing is continued for a further 2 minutes. Finally, the cement is added and the mixing is continued for 2 minutes.

The conglomerate thus obtained, when subjected to the Marshall test, reaches the characteristics described below. These values can be compared to those of a conglomerate prepared with the classical method with the same granulometric melt and starting modified bitumen.

| | | Example 1 | Classical hot technology | ANAS specifications |
|---|---|---|---|---|
| Marshall stability | kg | 530 | 1780 | >1000 |
| Slip | mm | 2 | 4.3 | |
| Rigidity | kg/mm | 260 | 420 | >300 |
| % Residual voids | % | 14.8 | 4.3 | from 4 to 8 |

The Marshall stability is equal to 30% of that of the conglomerate prepared at a high temperature with modified bitumen, and equal to 53% of the minimum value required by ANAS specifications.

### EXAMPLE 2

The conglomerate is produced as in Example 1, except that, in this case, all the inert products, including the cement, are mixed at room temperature with 5% by weight with respect to the inert products, of water.

The end-product has the following characteristics:
Marshall stability: 1060 kg
Slip: 1.6 mm
Rigidity: 660 kg/mm
% free voids: 14.7%

This time the Marshall stability is equal to 60% of that of the conglomerate prepared at a high temperature with modified bitumen, and is higher than the minimum value required by ANAS specifications.

Other techniques, object of the present invention, have been developed using pastes at temperatures lower than 100°C; in this way the emission of fumes is eliminated/reduced and, contemporaneously, the characteristics of the conglomerate are improved.

A description follows of these pasting technologies effected from room temperature to temperatures lower than 100°C.

### Technology 3

The technique for improving the Marshall Stability is to effect a simple mixing of aggregates and emulsion at temperatures lower than 100°C, with long times up to 3 hours, typically with a maximum of 2 hours.

In this way, the conglomerates have a Marshall Stability equal to 50-75% of the values obtained with the high temperature technology with modified bitumen (see Example 3).

### Technology 4

A variation of technology 3, object of the invention, for improving the characteristics, consists of the preparation of a paste in which part of the filler is substituted by cement, for a quantity varying from 1 to 10% by weight with respect to the total aggregates. The mixing time is less than 2 hours.

The conglomerate thus prepared can reach Marshall Stability values equal to 70-85% of the traditional values.

### Technology 5

Using technology 3 but adopting a pasting procedure of the sequential type, the Stability values are further raised to 90%.

In this case, the largest sizes are mixed first with a quantity of emulsion ranging from 1 to 40% of the total quantity, typically from 5 to 35%, the intermediate sizes are subsequently added with the remaining emulsion, and finally the filler.

Each step has a mixing time of 1 to 40 minutes; the whole preparation of the conglomerate typically lasts from 10 minutes to 2 hours (see Example 5).

### Technology 6

Finally, it is possible to raise the Marshall stability to values close to those of a classical conglomerate with modified bitumen, using the times and pasting procedure described in technology 5, with the sole variation that part of the filler is substituted with cement (quantity ranging from 1 to 8%). See Example 6.

### EXAMPLE 3 (comparative)

To produce the emulsion, a bitumen modified with SBS (5.5% by weight) is used, having a ring-and-ball of 92°C, a penetration of 79 dmm and a "dispersing" phase containing 0.8% of emulsifier based on fatty amines and N-alkyl-propane-diamine.

On bringing the bitumen to 185°C and the "dispersing" phase to 3.5 bars, an emulsion is produced with the colloidal mill, containing 61% by weight of modified bitumen.

The aggregates used relate to a standard closed granulometric melt for overlays (ANAS specifications).

| ASTM Sieves | Progressive undersize | |
|---|---|---|
| Nr. | Sieve Mesh (mm) | weight % |
| 1/2" | 12.7 | 100 |
| 3/8" | 9.5 | 93.5 |
| 1/4" | 6.35 | 60.6 |
| 5 mesh | 4.0 | 51.9 |
| 10 mesh | 2.0 | 37.4 |
| 20 mesh | 0.84 | 28.4 |
| 40 mesh | 0.42 | 21.8 |
| 80 mesh | 0.177 | 11.9 |
| P 200 mesh | 0.074 | 7.8 |

A conglomerate is prepared by mixing all the inert products with the emulsion for 60 minutes maintaining the same temperature (90°C).

The emulsion was added so as to have a final content in the conglomerate of 4.8% of modified bitumen.

With the conglomerate thus obtained, test samples are prepared which are subjected to the Marshall test. The test indicates the characteristics specified below, which can be compared with those of a conglomerate prepared with the same granulometric melt and modified bitumen.

| | | Example 3 | Classical hot technology | ANAS specifications |
|---|---|---|---|---|
| Marshall stability | kg | 980 | 1460 | >1000 |
| Slip | mm | 5.3 | 3.9 | |
| Rigidity | kg/mm | 185 | 375 | >300 |
| % Residual voids | % | 5.6 | 4.4 | from 4 to 8 |

The Marshall stability is equal to 67% of that of the conglomerate prepared at a high temperature with modified bitumen, and is slightly lower than the threshold value of ANAS specifications.

### EXAMPLE 4

The conglomerate is produced as described in Example 3, with the difference that part of the 200 mesh undersize was substituted with Portland cement (or rather 7% of the filler necessary for respecting the melt was substituted by 7% of cement).
The end-product has the following characteristics:
Marshall Stability: 1160 kg
Slip: 4.5 mm
Rigidity: 258 kg/mm
% free voids: 5.6%

The Marshall Stability is equal to 79% of that of the conglomerate prepared at a high temperature with modified bitumen, and is higher than the value required by ANAS specifications.

### EXAMPLE 5 (comparative)

The emulsion, aggregates and melt of Example 3 are used.

The conglomerate, however, is produced with the following procedure: 20% of emulsion is paste-mixed with sizes 8/15 and 3/8 at 90°C for 20 minutes; the remaining emulsion is then added together with size 0/3 and the mixing is continued for a further 20 minutes. Finally the filler is added and the paste-mixing is continued for a further 20 minutes.
The end-product has the following characteristics:
Breaking Load: 1300 kg
Slip: 4.4 mm
Rigidity: 295 kg/mm
% free voids: 6.6%

The Marshall Stability is equal to 89% of that of the conglomerate prepared at a high temperature with modified bitumen, and is higher than the value required by ANAS specifications.

### EXAMPLE 6

The conglomerate is produced as described in Example 5, with the difference that part of the 200 mesh undersize was substituted with Portland cement (or rather 7% of the filler necessary for respecting the melt was substituted by 7% of cement).
The end-product has the following characteristics:
Breaking Load: 1400 kg
Slip: 3.2 mm
Rigidity: 438 kg/mm
% free voids: 6%

The Marshall Stability is equal to 96% of that of the conglomerate prepared at a high temperature with modified bitumen, and is higher than the value required by ANAS specifications.

As far as the other values are concerned, the rigidity exceeds the Specification values, whereas the percentage of free voids is at the maximum limit required.

## Claims

1. A method for the preparation, without the emission of bituminous fumes, of overlays consisting in mixing the ingredients necessary for the formation of the overlay itself with an emulsion of bitumen modified with a percentage of polymer ranging from 1 to 20% by weight, at temperatures lower than 100°C and for times of less than 3 hours, wherein the sizes coherent with the overlay melt are mixed with the emulsion of modified bitumen necessary for having a final content of modified bitumen with respect to the total aggregates equal to 3-8% by weight, and wherein part of the filler in the sizes is substituted with a quantity of cement ranging from 1 to 10% by weight with respect to the aggregates.

2. The method for the preparation of overlays according to the previous Claim, comprising the following steps:
- Mixing of all sizes of inert products with water;
- Addition to the mixture thus obtained of the emulsion of modified bitumen and mixing;
- addition of cement
- Final mixing

3. The method for the preparation of overlays according to the previous claim 1 or 2, **characterized by** the following phases:
- Mixing for 1-10 minutes of water (1-10% by weight with respect to the inert products) with all the sizes of the inert products, coherent with the overlay melt, except for the quantity of cement (1-7% by weight with respect to the aggregates) substituting part of the filler
- Addition of the quantity of emulsion necessary for having a final content of modified bitumen with respect to the total aggregates of 3-8% by weight, and mixing for 1-10 minutes;
- Addition of the cement and mixing for 1-10 minutes.

4. The method for the preparation of overlays according to claim 1 or 2, **characterized by** the following phases:
- Mixing for 1-10 minutes of water (1-10% by weight with respect to the inert products) with all the sizes of the inert products, coherent with the overlay melt, comprising the quantity of cement (1-7% by weight with respect to the aggregates) substituting part of the filler
- Addition of the quantity of emulsion necessary for having a final content of modified bitumen with respect to the total aggregates of 3-8% by weight, and mixing for 1-10 minutes.

## Patentansprüche

1. Verfahren zur Herstellung von Belägen ohne Emission von bitumenhaltigen Dämpfen, bestehend aus dem Mischen der für die Bildung des Belages selbst erforderlichen Bestandteile mit einer mit einem prozentualen Anteil an Polymer im Bereich von 1 bis 20 Gew.-% modifizierten Bitumen-Emulsion bei Temperaturen von weniger als 100°C und für Zeitspannen von weniger als 3 Stunden, wobei die mit der Belagsschmelze zusammenpassenden Größen mit der modifizierten Bitumen-Emulsion, die erforderlich ist, dass der Endgehalt an modifiziertem Bitumen, bezogen auf die Gesamtmenge von Aggregaten, gleich 3-8 Gew.-% ist, gemischt werden, und wobei ein Teil des Füllstoffs in den Größen mit einer Menge an Zement im Bereich von 1 bis 10 Gew.-%, bezogen auf die Aggregate, ersetzt wird.

2. Verfahren zur Herstellung von Belägen gemäß dem vorhergehenden Anspruch, umfassend die folgenden Stufen:
- Mischen aller Größen von inerten Produkten mit Wasser;
- Zugeben der modifizierten Bitumen-Emulsion zu der so erhaltenen Mischung und Mischen;
- Zugeben von Zement;
- abschließendes Mischen.

3. Verfahren zur Herstellung von Belägen gemäß den vorhergehenden Ansprüchen 1 oder 2, **gekennzeichnet durch** die folgenden Stufen:
- Mischen von Wasser (1-10 Gew.-%, bezogen auf die inerten Produkte) mit allen Größen der inerten Produkte, die mit der Belagsschmelze zusammenpassend sind, außer der Menge an Zement (1-7 Gew.-%, bezogen auf die Aggregate), die einen Teil des Füllstoffs ersetzt, für 1-10 Minuten;
- Zugeben der Menge an Emulsion, die erforderlich ist, dass der Endgehalt an modifiziertem Bitumen, bezogen auf die Gesamtmenge von Aggregaten, 3-8 Gew.-% ist, und Mischen für 1-10 Minuten;
- Zugeben des Zements und Mischen für 1-10 Minuten.

4. Verfahren zur Herstellung von Belägen gemäß Anspruch 1 oder 2, **gekennzeichnet durch** die folgenden Stufen:
- Mischen von Wasser (1-10 Gew.-%, bezogen auf die inerten Produkte) mit allen Größen der inerten Produkte, die mit der Belagsschmelze

## Revendications

1. Procédé permettant de préparer un tapis d'enrobés sans qu'il y ait émission de fumées de bitume, qui consiste à mélanger les ingrédients nécessaires à la formation du tapis d'enrobés lui-même avec une émulsion de bitume modifié par addition d'un polymère en une proportion pondérale de 1 à 20 %, à température inférieure à 100 °C et pendant moins de 3 heures, dans lequel procédé l'on mélange les granulats, joints au liant fondu pour tapis d'enrobés, et l'émulsion de bitume modifié en les quantités nécessaires pour que le bitume modifié représente finalement de 3 à 8 % du poids total des agrégats, et dans lequel procédé une fraction de la charge, parmi les granulats, est remplacée par une quantité de ciment représentant de 1 à 10 % du poids des agrégats.

2. Procédé de préparation de tapis d'enrobés, conforme à la revendication précédente, qui comporte les opérations suivantes :
- mélanger tous les granulats inertes avec de l'eau ;
- ajouter au mélange ainsi obtenu l'émulsion de bitume modifié, et mélanger le tout ;
- ajouter du ciment ;
- et enfin, mélanger le tout.

3. Procédé de préparation de tapis d'enrobés, conforme à la revendication précédente 1 ou 2, **caractérisé par** les opérations suivantes :
- mélanger, durant 1 à 10 minutes, de l'eau en une quantité représentant 1 à 10 % du poids des inertes, et tous les granulats inertes, joints au liant fondu pour tapis d'enrobés, excepté la quantité de ciment, représentant 1 à 7 % du poids des agrégats, qui remplace une partie de la charge ;
- ajouter l'émulsion, en la quantité nécessaire pour que le bitume modifié représente finalement de 3 à 8 % du poids total des agrégats, et mélanger le tout durant 1 à 10 minutes ;
- ajouter le ciment et mélanger le tout durant 1 à 10 minutes.

4. Procédé de préparation de tapis d'enrobés, conforme à la revendication précédente 1 ou 2, **caractérisé par** les opérations suivantes :
